# EUROPÄISCHE PATENTSCHRIFT

(11) **EP 1 911 604 B1**
(45) Veröffentlichungstag und Bekanntmachung des Hinweises auf die Patenterteilung: **30.05.2012**
(21) Anmeldenummer: 07018744.8
(22) Anmeldetag: 24.09.2007
(51) Int. Cl.: B60B 23/00, B60B 23/08

(54) **Stahlrad und Verfahren zu dessen Herstellung**
Steel wheel and method for its manufacture
Roue en acier et son procédé de fabrication

(30) Priorität: 13.10.2006 DE 102006048528
(43) Veröffentlichungstag der Anmeldung: 16.04.2008
(73) Patentinhaber: Volkswagen Aktiengesellschaft, 38436 Wolfsburg (DE)
(72) Erfinder: Schröder, Dennis, 38477 Jembke (DE)

(56) Entgegenhaltungen:
- EP-A1- 1 415 737
- DE-A1- 19 548 109
- DE-T1- 4 498 312
- US-A- 2 200 361

## Beschreibung

Die Erfindung bezieht sich auf ein Stahlrad mit einer Felge und einer daran befestigten Radscheibe, dessen Felge ein zwischen zwei Felgenhörnern verlaufendes Felgentiefbett aufweist und dessen Radscheibe im Bereich des Felgentiefbetts an der Felge befestigt ist. Weiterhin bezieht sich die Erfindung auf ein Verfahren zur Herstellung eines solchen Rades.

Stahlstrukturräder für Kraftfahrzeuge werden zumeist aus einer Felge und einer Radscheibe hergestellt, wobei die Radscheibe durch Schweißen an der Felge befestigt wird.

Ein solches Stahlstrukturrad wird beispielsweise in der DE 197 21 860 A1 beschrieben. Bei diesem bekannten Stahlrad weist die Felge eine im wesentlichen konstante Wanddicke auf, die derart ausgelegt werden muss, dass die Felge den im Betrieb auftretenden Belastungen standhält. Aufgrund der Betriebssicherheit und der Herstellbarkeit ergibt sich eine verhältnismäßig hohe Wanddicke, die bei MAGgeschweißten Rädern in der Größenordnung von 2,1 mm liegt. So muss beispielsweise der Bereich der Felgenhörner im Hinblick auf einen Bordsteinanprall eine erhöhte Beulsteifigkeit aufweisen. Ferner muss am Befestigungsbereich für die Radscheibe an dem Felgentiefbett eine ausreichende Wanddicke vorgesehen werden, damit es beim Fügen nicht zu einem Durchbrennen des Felgentiefbetts kommt. Aus der hohen Wanddicke resultiert jedoch ein hohes Bauteilgewicht.

Zur Verminderung des Gewichts wurde verschiedentlich bereits vorgeschlagen, an einem solchen Stahlrad einzelne Abschnitte der Felge mit geringerer Wanddicke auszubilden.

So offenbart die DE 195 48 109 A1 die Möglichkeit, einen Abschnitt des Felgentiefbetts sowie das innenseitige Felgenhorn mit geringerer Wanddicke auszubilden als den Befestigungsabschnitt für die Radscheibe und das äußere Felgenhorn.

Weiterhin wird in der DE 44 98 312 A vorgeschlagen, lediglich den Bereich zwischen dem innenseitigen Felgenhorn und dem Befestigungsabschnitt mit verringerter Wanddicke herzustellen.

In der WO 02/058946 A1 wird ferner die Möglichkeit offenbart, die Verbindungsabschnitte zwischen dem Befestigungsabschnitt und den beiden Felgenhörnern mit verringerter Wanddicke herzustellen.

Weiterhin ist aus der EP 1 415 737 A1 ein Fahrzeugrad bekannt, bei dem eine Felge aus Stahlblech und eine Radscheibe mittels Durchsetzfügeverbindungen oder durch Stanznieten verbunden sind. Die Anbindung der Radscheibe an der Felge erfolgt an einem zwischen zwei Felgenhörnern verlaufenden Felgentiefbett.

US 2,200,361 offenbart ein Fahrzeugrad, bei dem eine Felge und eine Radscheibe durch Niete verbunden sind. Dabei weisen die Felgenhörner eine größere Wanddicke auf als der Befestigungsbereich für die Radscheibe an der der Felge.

Davon ausgehend liegt der Erfindung die Aufgabe zugrunde, das Bauteilgewicht eines Stahlrads weiter zu verringern.

Diese Aufgabe wird durch ein Stahlrad gemäß Patentanspruch 1 gelöst. Das erfindungsgemäße Stahlrad umfasst eine Felge aus Stahlblech und eine daran befestigte Radscheibe, wobei die Felge ein zwischen zwei Felgenhörnern verlaufendes Felgentiefbett mit einem Befestigungsbereich für die Radscheibe aufweist und die Radscheibe am Befestigungsbereich des Felgentiefbetts der Felge befestigt ist. Das erfindungsgemäße Stahlrad zeichnet sich insbesondere dadurch aus, dass die aus Stahlblech bestehende Felge Befestigungsbereich des Felgentiefbetts eine im Vergleich zu den Felgenhörnern verminderte Wanddicke aufweist und die Felge an dem Befestigungsbereich des Felgentiefbetts eine Wanddicke im Bereich von 1,2 bis 1,6 mm aufweist.

Durch die Kombination eines veränderten Wanddickenverlaufs an der Felge mit einem bisher ungebräuchlichen Fügeverfahren ergibt sich im Vergleich zu geschweißten Stahlrädern ein deutliches Gewichtseinsparungspotenzial, das je Rad in der Größenordnung von etwa 400 g liegen kann.

Zudem werden durch den Wegfall einer Schweißverbindung Gefügeveränderungen in der Felge wie auch in der Radscheibe sowie diesbezüglich erforderliche Gegenmaßnahmen vermieden.

Insbesondere kann die Felge an dem Befestigungsbereich des Felgentiefbetts mit einer nicht mehr schweißbaren Wanddicke hergestellt werden.

Gemäß einer vorteilhaften Ausgestaltung der Erfindung kann die Felge im Befestigungsbereich des Felgentiefbetts mit ihrer minimalen Wanddicke ausgebildet werden.

Gemäß einer vorteilhaften Ausgestaltung kann das Felgentiefbett mit einer in wesentlichen konstanten Wanddicke ausgeführt werden, wohingegen die Felgenhörner eine größere Wanddicke aufweisen. Vorzugsweise werden hierbei jedoch markante Wanddickensprünge vermieden und vielmehr weiche Wanddickenübergänge vorgesehen.

Weiterhin ist es möglich, dass die Wanddicke von dem verjüngten Befestigungsabschnitt des Felgentiefbetts zu den Felgenhörnern hin kontinuierlich zunimmt.

Gemäß einer vorteilhaften Ausgestaltung der Erfindung sind an den Durchsetzfügeverbindungen Abschnitte der Radscheibe punktweise in das Felgentiefbett gedrückt. Die Radscheibe kann hierbei eine größere Wanddicke aufweisen, als der Befestigungsbereich an dem Felgentiefbett.

Zur Erleichterung der Anbringung der Durchsetzfügeverbindungen kann das Felgentiefbett im Bereich der Befestigung der Radscheibe mit einem radial nach innen eingezogenen Ringabschnitt ausgebildet werden.

Die oben genannte Aufgabe wird weiterhin durch ein neues Herstellungsverfahren gemäß Patentanspruch 9 gelöst, das sich besonders zur Herstellung des vorstehend erläuterten Stahlrads eignet.

Das erfindungsgemäße Verfahren zur Herstellung eines Stahlrads aus einer Felge und einer Radscheibe, dessen Felge ein zwischen zwei Felgenhörnern verlaufendes Felgentiefbett aufweist und dessen Radscheibe im Bereich des Felgentiefbetts befestigt ist, zeichnet sich dadurch aus, dass die Felge aus einem Blechring hergestellt wird, dessen Wanddicke im Bereich der Befestigung der Radscheibe am Felgentiefbett durch Drücken auf eine minimale Wanddicke an der Felge verringert wird, und dass die Radscheibe durch Durchsetzfügen oder Stanznieten mit dem durch Drücken verjüngten Wandabschnitt des Felgentiefbetts verbunden wird.

Dies gestattet die Herstellung eines leichtgewichtigen Stahlstrukturrads, da durch den Wegfall einer Schweißverbindung der Befestigungsbereich an dem Felgentiefbett mit verminderter Wanddicke ausgeführt werden kann. Wie oben bereits ausgeführt, lassen sich an dem Befestigungsbereich Wanddicken realisieren, die nicht mehr schweißbar sind und in der Größenordnung von 1,2 bis 1,6 mm liegen.

Das Verjüngen des Felgentiefbetts erfolgt vorzugsweise durch Rolldrücken. Hierbei wird zusätzlich ein Materialverfestigungseffekt erzielt.

Alternativ können auch so genannte Tailored Blanks als Halbzeuge für die Herstellung der Felge verwendet werden, die bereits unterschiedliche Wanddicken aufweisen, welche sich an der Ziel-Wanddicke orientieren. Eine so hergestellte Felge kann durch Drücken, wie oben erläutert, weiterbehandelt werden. Es ist jedoch auch denkbar, eine Felge ohne weitere Durchmesserverringerung im Befestigungsbereich des Felgentiefbetts aus einem bereits die Ziel-Wanddicke aufweisenden Tailored Blank herzustellen.

Gemäß einer weiteren vorteilhaften Ausgestaltung erfolgt das Stanznieten oder Durchsetzfügen punktweise. Bevorzugt werden hierbei Abschnitte der Radscheibe in den verjüngten Bereich des Felgentiefbetts gedrückt.

Weitere, vorteilhafte Ausgestaltungen des erfindungsgemäßen Stahlrades sowie des erfindungsgemäßen Verfahrens sind in den Patentansprüchen angegeben.

Nachfolgend wird die Erfindung anhand eines in der Zeichnung dargestellten Ausführungsbeispiels näher erläutert. Die Zeichnung zeigt in:
- Figur 1: eine Schnittansicht einer Felge sowie eines Abschnitts einer daran befestigten Radscheibe eines Stahlrads gemäß einem Ausführungsbeispiel der Erfindung, und in
- Figur 2: einen Detailansicht einer Durchsetzfügeverbindungen zwischen der Felge und der Radscheibe aus Figur 1 im Schnitt.

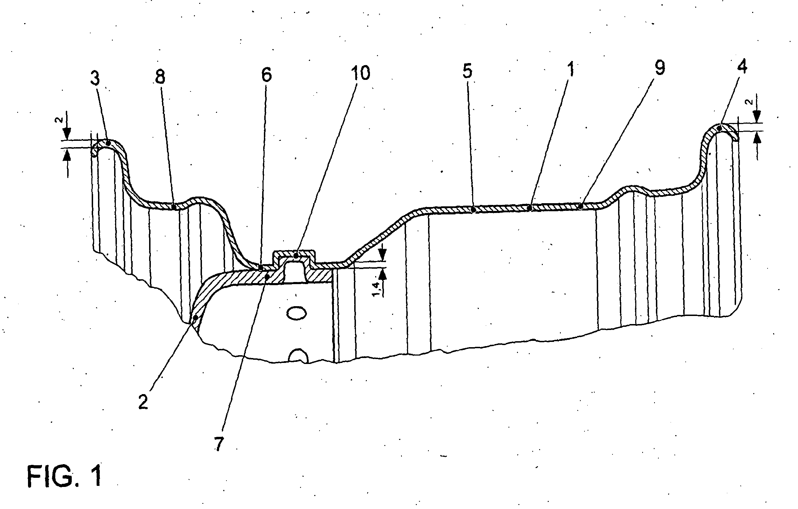

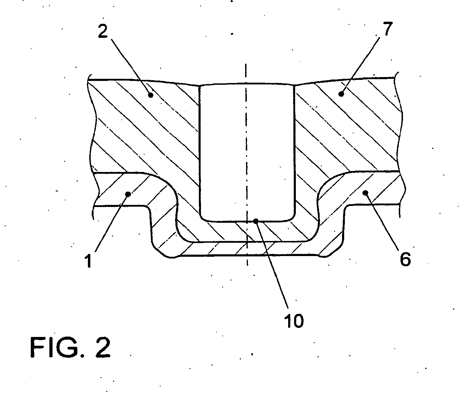

Das in den Figuren 1 und 2 dargestellte Ausführungsbeispiel bezieht sich auf ein Stahlrad, das aus zwei Komponenten, nämlich einer Felge 1 und einer Radscheibe 2 zusammengesetzt ist. Sowohl die Felge 1 als auch die Radscheibe 2 sind hierbei aus Stahlblech hergestellt.

Im Unterschied zu herkömmlichen Stahlrädern sind die Felge 1 und die Radscheibe 2 jedoch nicht thermisch sondern durch eine umformtechnische Kaltumformung miteinander gefügt.

Wie Figur 1 zeigt, weist die Felge 1 ein außenseitiges Felgenhorn 3 sowie ein innenseitiges Felgenhorn 4 auf. Beide Felgenhörner 3 und 4 sind durch ein Felgentiefbett 5 integral miteinander verbunden.

An dem Felgentiefbett 5 ist ein Wandabschnitt radial nach innen, das heißt zur Mitte der Felge hin eingezogen. Der so gebildete Ringabschnitt dient als Befestigungsbereich 6 für die Radscheibe 2 und ist an seinem Innenumfang im Wesentlichen zylindrisch ausgebildet. Die Radscheibe 2 weist einen entsprechend abgewinkelten Außenrandbereich 7 auf, der sich radial gegen den Ringabschnitt bzw. Befestigungsbereich 6 abstützt.

Wie Figur 1 weiter zeigt, weist die Felge 1 in Axialrichtung eine variierende Wanddicke auf. So sind speziell die Felgenhörner 3 und 4 mit einer im Vergleich zu dem Felgentiefbett 5 hohen Wanddicke ausgeführt. Insbesondere ist hierbei im Befestigungsbereich 6 für die Radscheibe 2 an dem Felgentiefbett 5 auf eine Wandverdickung, wie sie bei geschweißten Stahlrädern üblich ist, verzichtet. Die Wanddicke im Befestigungsbereich 6 der Felge 1 ist vielmehr deutlich geringer als an den Felgenhörnern 3 und 4, woraus im Vergleich zu geschweißten Stahlrädern eine merkliche Gewichtseinsparung resultiert.

Bei dem dargestellten Ausführungsbeispiel weist die Felge 1 an dem Befestigungsbereich 6 des Felgentiefbetts 5 eine nicht mehr schweißbare Wanddicke auf. So sind in Figur 1 die Felgenhörner 3 und 4 beispielhaft mit einer Wanddicke von 2 mm, der Befestigungsbereich 6 hingegen mit einer Wanddicke im Bereich von 1,2 bis 1,6, vorzugsweise 1,4 mm ausgeführt. Die Wanddicke der Radscheibe 2 liegt in der Größenordnung von 5 mm.

Diese verminderte Wanddicke des Befestigungsbereichs 6 kann im Wesentlichen über die gesamte Breite des Felgentiefbetts 5 beibehalten werden. Zu den dickeren Feigenhörnern 3 und 4 ist ein weicher Wanddickenübergang vorgesehen.

Prinzipiell kann die Felge 1 an dem Befestigungsbereich 6 des Felgentiefbetts 5 ihre minimale Wanddicke aufweisen. Es ist jedoch auch möglich, die Wandabschnitte 8 und 9 zwischen dem Befestigungsbereich 6 und jeweils einem Felgenhorn 3 bzw. 4 jeweils noch etwas dünner auszugestalten.

Bei dem dargestellten Ausführungsbeispiel ist das Felgentiefbett 5 mit einer im Wesentlichen konstanten Wanddicke dargestellt. Allerdings kann der Wanddickenverlauf von dem verjüngten Befestigungsabschnitt 6 des Felgentiefbetts 5 zu den Felgenhörnern 3 und 4 hin auch kontinuierlich, insbesondere gleichmäßig zunehmend ausgestaltet werden.

Die Befestigung der Radscheibe 2 an der Felge 1 erfolgt, wie bereits erwähnt, im Befestigungsbereich 6 durch eine Kaltumformung, bei der die dickere Radscheibe 2 von innen her mit der dünneren Felge 1 verpresst wird.

Vorzugsweise kommen hierbei Durchsetzfügeverbihdungen 10 zum Einsatz, die durch den Materialfluss im Blechmaterial eine kraft- und formschtüssige Verbindung bilden. Ein Beispiel für eine solche Durchsetzfügeverbindung 10 ist in Figur 1 im Schnitt dargestellt. Eine Vielzahl von solchen punktförmigen Durchsetzfügeverbindungen 10 sind am Innenumfang des Außenrandabschnitts 7 der Radscheibe 2 vorgesehen, um diesen fest mit dem Befestigungsabschnitt 6 der Felge 1 zu verbinden. Dabei sind jeweils Abschnitte der Radscheibe 2 punktweise in das Felgentiefbett 5 gedrückt. Des Weiteren können die Felge 1 und die Radscheibe 2 durch Stanznieten miteinander verbunden werden.

Die Herstellung der Felge 1 erfolgt aus einem Blechring, der umformtechnisch, beispielsweise durch Rolldrücken seine Form und seinen Wanddickenverlauf erhält. Insbesondere kann die Wanddicke der Felge 1 im Bereich der Befestigung der Radscheibe 2 am Felgentiefbett 5 durch Drücken auf eine minimale oder zumindest nicht-schweißbare Wanddicke verringert werden.

Anschließend wird die Radscheibe 2 mittels Durchsetzfügen mit dem verjüngten Wandabschnitt des Felgentiefbetts 5 verbunden, wozu vorzugsweise eine Vielzahl von Durchsetzfügepunkten, gegebenenfalls auch Stanzniete, von der Seite der Radscheibe 2 her, das heißt durch eine radial nach außen gerichtete Stempelbewegung angebracht werden.

Anstelle einer Umformung eines Blechrings durch Rolldrücken kann zur Herstellung der Felge 1 als Halbzeug auch ein Tailored Blank verwendet werden, das einen der Ziel-Wanddicke entsprechenden oder zumindest nahe kommenden Wanddickenverlauf aufweist. In diesem Fall kann prinzipiell eine Nachbehandlung des Felgentiefbetts 5 durch Rolldrücken unterbleiben. Da mit letzterem in der Regel eine Materialverfestigung einhergeht, kann auch eine aus einem Tailored Blank hergestellte Felge 1 zumindest teilweise umgeformt werden.

Die Erfindung wurde vorstehend anhand eines bevorzugten Ausführungsbeispiels sowie möglicher Abwandlungen näher erläutert. Sie ist jedoch nicht hierauf beschränkt, sondern umfasst alle durch die Patentansprüche definierten Ausgestaltungen.

### Bezugszeichenliste

- 1: Felge
- 2: Radscheibe
- 3: Felgenhorn
- 4: Felgenhorn
- 5: Felgentiefbett
- 6: Befestigungsbereich
- 7: Außenrandabschnitt
- 8: Wandabschnitt
- 9: Wandabschnitt
- 10: Durchsetzfügung

## Patentansprüche

1. Stahlrad mit einer Felge (1) aus Stahlblech und einer daran befestigten Radscheibe (2), wobei die Felge (1) ein zwischen zwei Felgenhörnern (3, 4) verlaufendes Felgentiefbett (5) mit einem Befestigungsbereich (6) für die Radscheibe (2) aufweist und die Radscheibe (2) am Befestigungsbereich (6) des Felgentiefbetts (5) der Felge (1) mittels Durchsetzfügeverbindungen (10) oder durch Stanznieten befestigt ist,
**dadurch gekennzeichnet, dass**
die aus Stahlblech bestehende Felge (1) im Befestigungsbereich (6) des Felgentiefbetts (5) eine im Vergleich zu den Felgenhörnern (3, 4) verminderte Wanddicke aufweist, und
die Felge (1) an dem Befestigungsbereich (6) des Felgentiefbetts (5) eine Wanddicke im Bereich von 1,2 bis 1,6 mm aufweist.

2. Stahlrad nach Anspruch 1, **dadurch gekennzeichnet, dass** an den Durchsetzfügeverbindungen (10) Abschnitte der Radscheibe (2) punktweise in das Felgentiefbett (5) gedrückt sind.

3. Stahlrad nach Anspruch 1 oder 2, **dadurch gekennzeichnet, dass** die Felge (1) an dem Befestigungsbereich (6) des Felgentiefbetts (5) ihre minimale Wanddicke aufweist.

4. Stahlrad nach einem der Ansprüche 1 bis 3, **dadurch gekennzeichnet**, die Felge (1) an dem Befestigungsbereich (6) des Felgentiefbetts (5) eine nicht-schweißbare Wanddicke aufweist.

5. Stahlrad nach einem der Ansprüche 1 bis 4, **dadurch gekennzeichnet, dass** die Wanddicke von dem verjüngten Befestigungsabschnitt (6) des Felgentiefbetts (5) zu den Felgenhörnern (3, 4) hin kontinuierlich zunimmt.

6. Stahlrad nach einem der Ansprüche 1 bis 4, **dadurch gekennzeichnet, dass** das Felgentiefbett (5) eine im wesentlichen konstante Wanddicke aufweist und die Felgenhörner (3, 4) demgegenüber eine größere Wanddicke aufweisen.

7. Stahlrad nach einem der Ansprüche 1 bis 6, **dadurch gekennzeichnet, dass** das Felgentiefbett (5) im Bereich der Befestigung der Radscheibe (2) einen radial nach innen eingezogenen Ringabschnitt ausbildet.

8. Verfahren zur Herstellung eines Stahlrads aus einer Felge (1) und einer Radscheibe (2), wobei die Felge (1) ein zwischen zwei Felgenhörnern (3, 4) verlaufendes Felgentiefbett (5) mit einem Befestigungsbereich (6) für die Radscheibe (2) aufweist, bei dem die Felge (1) aus einem Blechring hergestellt wird und die Radscheibe (2) am Befestigungsbereich (6) des Felgentiefbetts (5) mittels Durchsetzfügen oder Stanznieten befestigt wird, **dadurch gekennzeichnet, dass** die Wanddicke des Blechrings im Befestigungsereich (6) des Felgentiefbettes (5) durch Drücken auf eine minimale Wanddicke im Bereich von 1,2 bis 1,6 mm an der Felge (1) verringert wird, und dass die Radscheibe (2) durch Durchsetzfügen oder Stanznieten mit dem durch Drücken verjüngten Wandabschnitt des Felgentiefbetts (5) verbunden wird.

9. Verfahren nach Anspruch 8, **dadurch gekennzeichnet, dass** das Felgentiefbett (5) im Befestigungsbereich (6) auf eine nicht-schweißbare Wanddicke zusammengedrückt wird.

10. Verfahren nach Anspruch 9, **dadurch gekennzeichnet, dass** das Verjüngen des Felgentiefbetts (5) durch Rolldrücken erfolgt.

11. Verfahren nach einem der Ansprüche 8 bis 10, **dadurch gekennzeichnet, dass** das Durchsetzfügen punktweise erfolgt.

12. Verfahren nach Anspruch 11, **dadurch gekennzeichnet, dass** beim Durchsetzfügen oder Stanznieten Abschnitte der Radscheibe (2) in den Befestigungsbereich (6) des Felgentiefbetts (5) gedrückt werden.

13. Verfahren nach einem der Ansprüche 8 bis 12, **dadurch gekennzeichnet, dass** die Felge (1) mit einer von dem verjüngten Befestigungsabschnitt des Felgentiefbetts (5) zu den Felgenhörnern (3, 4) hin kontinuierlich zunehmenden Wanddicke hergestellt wird.

14. Verfahren nach einem der Ansprüche 8 bis 12, **dadurch gekennzeichnet, dass** das Felgentiefbett (5) mit einer im wesentlichen konstanten Wanddicke und die Felgenhörner (3, 4) mit einer demgegenüber größeren Wanddicke hergestellt werden.

15. Verfahren nach einem der Ansprüche 8 bis 14, **dadurch gekennzeichnet, dass** für die Herstellung der Felge (1) als Halbzeug ein Tailored Blank mit unterschiedlichen Wanddicken verwendet wird.

16. Verfahren nach Anspruch 15, **dadurch gekennzeichnet, dass** das Tailored Blank im Bereich des Befestigungsabschnitts (6) des Felgentiefbetts (5) bereits nahezu die Ziel-Wanddicke der fertigen Felge (1) aufweist.

## Claims

1. Steel wheel having a rim (1) made of sheet steel and a wheel disc (2) fastened thereto, wherein the rim (1) has a rim drop centre (5) which runs between two rim flanges (3, 4) and has a fastening region (6) for the wheel disc (2), and the wheel disc (2) is fastened to the fastening region (6) of the rim drop centre (5) of the rim (1) by means of clinching connections (10) or by punch riveting,
**characterized in that**
the rim (1) consisting of sheet steel has a wall thickness in the fastening region (6) of the rim drop centre (5) which is reduced compared to the rim flanges (3, 4), and
the rim (1) has a wall thickness in the range of 1.2 to 1.6 mm at the fastening region (6) of the rim drop centre (5).

2. Steel wheel according to Claim 1, **characterized in that** portions of the wheel disc (2) are pressed into the rim drop centre (5) in a punctiform manner at the clinching connections (10).

3. Steel wheel according to Claim 1 or 2, **characterized in that** the rim (1) has its minimum wall thickness at the fastening region (6) of the rim drop centre (5).

4. Steel wheel according to one of Claims 1 to 3, **characterized in that** the rim (1) has a non-weldable wall thickness at the fastening region (6) of the rim drop centre (5).

5. Steel wheel according to one of Claims 1 to 4, **characterized in that** the wall thickness increases continuously from the tapered fastening portion (6) of the rim drop centre (5) towards the rim flanges (3, 4).

6. Steel wheel according to one of Claims 1 to 4, **characterized in that** the rim drop centre (5) has a substantially constant wall thickness and the rim flanges (3, 4), in comparison, have a greater wall thickness.

7. Steel wheel according to one of Claims 1 to 6, **characterized in that** the rim drop centre (5) forms a radially inwardly drawn annular portion in the region in which the wheel disc (2) is fastened.

8. Method for manufacturing a steel wheel made of a rim (1) and a wheel disc (2), wherein the rim (1) has a rim drop centre (5) which runs between two rim flanges (3, 4) and has a fastening region (6) for the wheel disc (2), in which method the rim (1) is manufactured from a sheet-metal ring and the wheel disc (2) is fastened to the fastening region (6) of the rim drop centre (5) by means of clinching or punch riveting, **characterized in that** the wall thickness of the sheet-metal ring in the fastening region (6) of the rim drop centre (5) is reduced by pressing to a minimum wall thickness in the range of 1.2 to 1.6 mm at the rim (1), and **in that** the wheel disc (2) is connected by clinching or punch riveting to the wall portion of the rim drop centre (5) which has been tapered by pressing.

9. Method according to Claim 8, **characterized in that** the rim drop centre (5) is compressed to a non-weldable wall thickness in the fastening region (6).

10. Method according to Claim 9, **characterized in that** the rim drop centre (5) is tapered by flow turning.

11. Method according to one of Claims 8 to 10, **characterized in that** the clinching is effected in a punctiform manner.

12. Method according to Claim 11, **characterized in that** portions of the wheel disc (2) are pressed into the fastening region (6) of the rim drop centre (5) during the clinching or punch riveting.

13. Method according to one of Claims 8 to 12, **characterized in that** the rim (1) is manufactured with a wall thickness which increases continuously from the tapered fastening portion of the rim drop centre (5) towards the rim flanges (3, 4).

14. Method according to one of Claims 8 to 12, **characterized in that** the rim drop centre (5) is manufactured with a substantially constant wall thickness and the rim flanges (3, 4) are manufactured, in comparison, with a greater wall thickness.

15. Method according to one of Claims 8 to 14, **characterized in that** a tailored blank with different wall thicknesses is used as the semifinished product for manufacturing the rim (1).

16. Method according to Claim 15, **characterized in that** the tailored blank already has approximately the target wall thickness of the finished rim (1) in the region of the fastening portion (6) of the rim drop centre (5).

## Revendications

1. Roue en acier comprenant une jante (1) en tôle d'acier et un disque de roue (2) fixé sur celle-ci, la jante (1) présentant une gorge de jante (5) s'étendant entre deux rebords de jante (3, 4), avec une région de fixation (6) pour le disque de roue (2), et le disque de roue (2) étant fixé sur la région de fixation (6) de la gorge de jante (5) de la jante (1) au moyen de liaisons par clinchage (10) ou par rivetage,
**caractérisée en ce que**
la jante (1) constituée de tôle d'acier présente, dans la région de fixation (6) de la gorge de jante (5), une épaisseur de paroi réduite par rapport aux rebords de jante (3, 4), et
la jante (1) présente, au niveau de la région de fixation (6) de la gorge de jante (5), une épaisseur de paroi comprise entre 1,2 et 1,6 mm.

2. Roue en acier selon la revendication 1, **caractérisée en ce que** des portions du disque de roue (2) sont pressées ponctuellement dans la gorge de jante (5) au niveau des liaisons par clinchage (10).

3. Roue en acier selon la revendication 1 ou 2, **caractérisée en ce que** la jante (1) présente au niveau de la région de fixation (6) de la gorge de jante (5) son épaisseur de paroi minimale.

4. Roue en acier selon l'une quelconque des revendications 1 à 3, **caractérisée en ce que** la jante (1) présente, au niveau de la région de fixation (6) de la gorge de jante (5), une épaisseur de paroi non soudable.

5. Roue en acier selon l'une quelconque des revendications 1 à 4, **caractérisée en ce que** l'épaisseur de paroi augmente en continu depuis la portion de fixation amincie (6) de la gorge de jante (5) jusqu'aux rebords de jante (3, 4).

6. Roue en acier selon l'une quelconque des revendications 1 à 4, **caractérisée en ce que** la gorge de jante (5) présente une épaisseur de paroi essentiellement constante et les rebords de jante (3, 4) présentent par rapport à celle-ci une épaisseur de paroi plus importante.

7. Roue en acier selon l'une quelconque des revendications 1 à 6, **caractérisée en ce que** la gorge de jante (5) constitue, dans la région de la fixation du disque de roue (2), une portion annulaire rentrée radialement vers l'intérieur.

8. Procédé de fabrication d'une roue en acier constituée d'une jante (1) et d'un disque de roue (2), la jante (1) présentant une gorge de jante (5) s'étendant entre deux rebords de jante (3, 4), avec une région de fixation (6) pour le disque de roue (2), la jante (1) étant fabriquée à partir d'un anneau en tôle et le disque de roue (2) étant fixé au niveau de la région de fixation (6) de la gorge de jante (5) au moyen de liaisons par clinchage ou rivetage, **caractérisé en ce que** l'épaisseur de paroi de l'anneau en tôle dans la région de fixation (6) de la gorge de jante (5) est réduite par compression à une épaisseur de paroi minimale de l'ordre de 1,2 à 1,6 mm au niveau de la jante (1) et **en ce que** le disque de roue (2) est connecté par liaison par clinchage ou rivetage à la portion de paroi de la gorge de jante (5) amincie par pressage.

9. Procédé selon la revendication 8, **caractérisé en ce que** la gorge de jante (5) est comprimée dans la région de fixation (6) à une épaisseur de paroi non soudable.

10. Procédé selon la revendication 9, **caractérisé en ce que** l'amincissement de la gorge de jante (5) s'effectue par laminage.

11. Procédé selon l'une quelconque des revendications 8 à 10, **caractérisé en ce que** le clinchage s'effectue ponctuellement.

12. Procédé selon la revendication 11, **caractérisé en ce que** lors du clinchage ou du rivetage, des portions du disque de roue (2) sont pressées dans la région de fixation (6) de la gorge de jante (5).

13. Procédé selon l'une quelconque des revendications 8 à 12, **caractérisé en ce que** la jante (1) est fabriquée avec une épaisseur de paroi augmentant en continu depuis la portion de fixation amincie de la gorge de jante (5) jusqu'aux rebords de jante (3, 4).

14. Procédé selon l'une quelconque des revendications 8 à 12, **caractérisé en ce que** la gorge de jante (5) est fabriquée avec une épaisseur de paroi essentiellement constante et les rebords de jante (3, 4) sont fabriqués avec une épaisseur de paroi plus grande par rapport à celle-ci.

15. Procédé selon l'une quelconque des revendications 8 à 14, **caractérisé en ce que** pour la fabrication de la jante (1) on utilise en tant que produit semi-fini une ébauche découpée sur mesure avec des épaisseurs de paroi différentes.

16. Procédé selon la revendication 15, **caractérisé en ce que** l'ébauche découpée sur mesure présente, dans la région de la portion de fixation (6) de la gorge de jante (5) déjà pratiquement l'épaisseur de paroi cible de la jante (1) finie.
